(19) Europäisches Patentamt
European Patent Office
Office européen des brevets

(11) **EP 3 063 032 B1**

(12) **EUROPÄISCHE PATENTSCHRIFT**

(45) Veröffentlichungstag und Bekanntmachung des Hinweises auf die Patenterteilung:
**13.01.2021  Patentblatt 2021/02**

(21) Anmeldenummer: **14802591.9**

(22) Anmeldetag: **29.10.2014**

(51) Int Cl.:
*B60K 6/48* (2007.10)　　　*B60W 20/00* (2016.01)
*B60W 10/04* (2006.01)　　*B60W 30/192* (2012.01)
*F02N 11/04* (2006.01)　　*B60W 10/06* (2006.01)
*B60W 50/00* (2006.01)

(86) Internationale Anmeldenummer:
**PCT/EP2014/002903**

(87) Internationale Veröffentlichungsnummer:
**WO 2015/062721 (07.05.2015 Gazette 2015/18)**

(54) **VERFAHREN ZUM BETREIBEN EINER HYBRIDANTRIEBSEINRICHTUNG SOWIE ENTSPRECHENDE HYBRIDANTRIEBSEINRICHTUNG**

METHOD FOR OPERATING A HYBRID DRIVE DEVICE AND CORRESPONDING HYBRID DRIVE DEVICE

PROCÉDÉ POUR FAIRE FONCTIONNER UN DISPOSITIF D'ENTRAÎNEMENT HYBRIDE ET DISPOSITIF D'ENTRAÎNEMENT HYBRIDE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2013  DE 102013017946**

(43) Veröffentlichungstag der Anmeldung:
**07.09.2016  Patentblatt 2016/36**

(73) Patentinhaber: **Audi AG**
**85045 Ingolstadt (DE)**

(72) Erfinder:
• SCHÜLE, Florian
**73061 Ebersbach (DE)**
• GÖBEL, Andreas
**86666 Burgheim (DE)**

(56) Entgegenhaltungen:
EP-A2- 1 925 521　　　DE-A1-102008 036 166
DE-A1-102008 064 291　　DE-A1-102010 030 800
DE-A1-102012 003 020

**Beschreibung**

Die Erfindung betrifft ein Verfahren zum Betreiben einer Hybridantriebseinrichtung mit einem ersten Antriebsaggregat und einem zweiten Antriebsaggregat, wobei ein Antriebsmoment der Hybridantriebseinrichtung in einer ersten Betriebsart nur mittels des ersten Antriebsaggregat und in einer zweiten Betriebsart von dem ersten Antriebsaggregat und dem zweiten Antriebsaggregat gemeinsam erzeugt wird, und wobei bei einem Umschalten von der ersten Betriebsart auf die zweite Betriebsart eine Istdrehzahl des zweiten Antriebsaggregats an eine Solldrehzahl angeglichen wird, die der Istdrehzahl des ersten Antriebsaggregats entspricht. Die Erfindung betrifft weiterhin eine Hybridantriebseinrichtung.

Die Hybridantriebseinrichtung weist wenigstens zwei Antriebsaggregate auf, nämlich das erste Antriebsaggregat und das zweite Antriebsaggregat. Als Antriebsaggregate können elektrische Maschinen, Brennkraftmaschinen oder dergleichen in beliebiger Kombination vorgesehen sein. Beispielsweise ist das erste Antriebsaggregat eine elektrische Maschine und das zweite Antriebsaggregat eine Brennkraftmaschine. In der ersten Betriebsart soll das Antriebsmoment allein mit Hilfe des ersten Antriebsaggregats erzeugt beziehungsweise bereitgestellt werden. Das bedeutet, dass das zweite Antriebsaggregat deaktiviert und/oder von dem ersten Antriebsaggregat abgekuppelt ist. Entsprechend liegt keine Wirkverbindung zwischen dem ersten Antriebsaggregat und dem zweiten Antriebsaggregat vor. Falls das erste Antriebsaggregat als elektrische Maschine ausgebildet ist, liegt insoweit in der ersten Betriebsart ein rein elektrischer Betrieb der Hybridantriebseinrichtung, insbesondere ein rein elektrisches Fahren eines Kraftfahrzeugs, welches die Hybridantriebseinrichtung aufweist, vor.

In der zweiten Betriebsart sollen dagegen das erste Antriebsaggregat und das zweite Antriebsaggregat das Antriebsmoment gemeinsam erzeugen. Das bedeutet, dass sowohl das erste Antriebsaggregat als auch das zweite Antriebsaggregat jeweils einen von Null verschiedenen Anteil des Antriebsmoments bereitstellen. Üblicherweise ist jedoch in der ersten Betriebsart das zweite Antriebsaggregat deaktiviert oder weist zumindest eine geringe Drehzahl auf, insbesondere eine geringere Drehzahl als das erste Antriebsaggregat. Entsprechend ist es notwendig, die Istdrehzahl des zweiten Antriebsaggregats an die Solldrehzahl anzugleichen, wenn von der ersten Betriebsart auf die zweite Betriebsart umgeschaltet wird. Die Solldrehzahl ist bevorzugt diejenige Drehzahl, bei welcher das zweite Antriebsaggregat betrieben werden muss, um mit dem ersten Antriebsaggregat gekuppelt zu werden, insbesondere ohne Komforteinbußen. Beispielsweise entspricht die Solldrehzahl der Istdrehzahl des ersten Antriebsaggregats, insbesondere unter Berücksichtigung einer Übersetzung eines zwischen dem ersten Antriebsaggregat und dem zweiten Antriebsaggregat unter Umständen vorgesehenen Getriebes.

Aus dem Stand der Technik ist beispielsweise die Druckschrift DE 10 2008 002 383 A1 bekannt, welche ein Verfahren zur Steuerung eines Hybridantriebstrangs eines Kraftfahrzeugs beschreibt.

Weiterhin ist die Druckschrift DE 10 2012 003020 A1 bekannt. In dieser Druckschrift wird ein elektronisches Regelsystem zur Drehzahlregelung wenigstens eines Antriebsmotors eines Kraftfahrzeugs vorgeschlagen, bei dem die Differenzdrehzahl zwischen einer vorgegebenen Soll-Drehzahl und einer Ist-Drehzahl des Antriebsmotors als Systemwerte zur Bestimmung von die Drehzahlregelung beeinflussenden Regelparametern berücksichtigt werden. Als zusätzlicher Systemwert wird der Differenzialdrehzahlgradient nach Betrag und Richtung zur Bestimmung der Regelparameter berücksichtigt.

Zudem beschreibt die Druckschrift DE 10 2010 030800 A1 ein Verfahren zur Berechnung eines ersten zeitlichen Verlaufs einer für die Soll-Drehzahl charakteristischen Größe bei Drehzahländerung in einem Kraftfahrzeug.

Die Druckschrift DE 10 2008 036166 A1 zeigt ein Verfahren zur Steuerung des Betriebs eines Hybridfahrzeugs, insbesondere eines Wechsels von einem Elektromotorbetrieb in einen Hybridbetrieb.

Es ist nun Aufgabe der Erfindung, ein Verfahren zum Betreiben einer Hybridantriebseinrichtung vorzuschlagen welches Vorteile gegenüber dem Stand der Technik aufweist, insbesondere das Umschalten von der ersten Betriebsart auf die zweite Betriebsart schnell und mit hohem Komfort durchführen kann.

Dies wird erfindungsgemäß mit einem Verfahren mit den Merkmalen des Anspruchs 1 erreicht. Dabei ist vorgesehen, dass zum Angleichen der Istdrehzahl einmalig zu Beginn des Angleichens ein Solldrehzahlgradient aus einer Mehrzahl von Solldrehzahlgradienten ausgewählt und ein anhand des Solldrehzahlgradienten bestimmtes Solldrehmoment an dem zweiten Antriebsaggregat eingestellt wird, wobei das Solldrehmoment mittels einer Regelung aus dem Solldrehzahlgradienten ermittelt wird, indem ein Istdrehzahlgradient auf den Solldrehzahlgradient geregelt wird, und wobei die Regelung eine Vorsteuerung umfasst, wobei das Solldrehmoment aus einem Trägheitsmoment des zweiten Antriebsaggregats und dem Solldrehzahlgradienten bestimmt wird.

Der Zustart des zweiten Antriebsaggregats, insbesondere der Brennkraftmaschine, wird bevorzugt situationsabhängig mit unterschiedlichen Anforderungen an Zuschaltdauer und Komfort vorgenommen. Ausschlaggebend für die Zuschaltdauer ist der Drehzahlgradient während des Angleichens der Istdrehzahl des zweiten Antriebsaggregats. Je größer der Drehzahlgradient ist, umso schneller wird die gewünschte Solldrehzahl durch die Istdrehzahl erreicht. Andererseits bewirkt ein kleiner Drehzahlgradient eine Erhöhung des Komforts, insbesondere wenn er, falls die Istdrehzahl die Solldrehzahl nahezu erreicht hat, vergleichsweise klein gewählt wird.

Aus diesem Grund soll zunächst der Solldrehzahlgradient festgelegt werden, mittels welchem das Angleichen der Istdrehzahl an die Solldrehzahl erreicht werden kann beziehungsweise vorgenommen werden soll. Anhand dieses Solldrehzahlgradienten wird nachfolgend das Solldrehmoment ermittelt und an dem zweiten Antriebsaggregat eingestellt. Das Solldrehmoment liegt insoweit als Funktion von dem ausgewählten Solldrehzahlgradienten vor. Beispielsweise wird der Solldrehzahlgradient lediglich einmalig zu Beginn des Umschaltens ausgewählt und ist nachfolgend bis zum Beenden des Umschaltens, also bis zum Erreichen der zweiten Betriebsart beziehungsweise dem Erreichen der Solldrehzahl durch die Istdrehzahl, konstant. Durch das Ermitteln des Solldrehmoments aus dem Solldrehzahlgradienten ist dabei sichergestellt, dass das Angleichen der Istdrehzahl an die Solldrehzahl ausreichend rasch und mit hohem Komfort, also insbesondere ohne Ruckeln, vorgenommen werden kann. Selbstverständlich kann alternativ auch der Solldrehzahlgradient mehrfach bestimmt werden, beispielsweise in Abhängigkeit von der Istdrehzahl beziehungsweise der Differenz zwischen Solldrehzahl und Istdrehzahl.

Nach dem Einstellen des Solldrehmoments an dem zweiten Antriebsaggregat wird dieses bevorzugt steuernd und/oder regelnd derart eingestellt, dass das Istdrehmoment dem Solldrehmoment entspricht. Bevorzugt ist eine Regelung des zweiten Antriebsaggregats beziehungsweise des Istdrehmoments des zweiten Antriebsaggregats auf das Solldrehmoment vorgesehen.

Die Erfindung sieht vor, dass das Solldrehmoment mittels einer Regelung aus dem Solldrehzahlgradienten ermittelt wird. Das Solldrehmoment wird also derart eingestellt, dass der sich aus dem Istdrehmoment ergebende Istdrehzahlgradient dem Solldrehzahlgradient entspricht beziehungsweise sich diesem annähert. Der Solldrehzahlgradient entspricht insoweit einer Führungsgröße, das Solldrehmoment einer Stellgröße und das Istdrehmoment beziehungsweise der aus diesem ermittelte Istdrehzahlgradient einer Regelgröße eines Regelkreises der Hybridantriebseinrichtung. Aus dem Solldrehzahlgradient und dem Istdrehzahlgradient wird beispielsweise eine Regelabweichung ermittelt, welche insbesondere als Differenz zwischen dem Solldrehzahlgradient und dem Istdrehzahlgradient vorliegt. Diese Regelabweichung wird einem Regler beziehungsweise einem Regelglied der Regelung zugeführt. Diese ermittelt nachfolgend die notwendige Stellgröße beziehungsweise das notwendige Solldrehmoment, um den Istdrehzahlgradient auf den Solldrehzahlgradient zu regeln.

Eine bevorzugte Ausgestaltung der Erfindung sieht vor, dass die Regelung wenigstens ein P-Regelglied, I-Regelglied und/oder ein D-Regelglied aufweist. Die Regelung beziehungsweise der Regler verfügen über wenigstens ein Regelglied, welches die genannten Ausgestaltungen annehmen kann. Selbstverständlich können auch mehrere Regelglieder vorgesehen sein, sodass insoweit ein P-Regler, I-Regler, PI-Regler, PD-Regler oder PID-Regler vorliegt. Besonders bevorzugt ist lediglich ein P-Regelglied vorgesehen, sodass ein P-Regler realisiert ist. Alternativ sind sowohl ein P-Regelglied als auch ein I-Regelglied und mithin ein PI-Regler vorgesehen.

Die Erfindung sieht weiter vor, dass die Regelung eine Vorsteuerung umfasst, wobei das Solldrehmoment aus dem Trägheitsmoment und dem Solldrehzahlgradienten bestimmt wird. Neben dem Regler beziehungsweise dem wenigstens einen Regelglied ist also die Vorsteuerung vorgesehen, mittels welcher unabhängig von der Regelabweichung das Solldrehmoment gewählt wird. Besonders bevorzugt liegt das Solldrehmoment, welches aus der Vorsteuerung resultiert, als Funktion von dem Solldrehzahlgradienten vor. Als weitere Eingangsgröße, welche insbesondere konstant ist, wird das Trägheitsmoment, insbesondere des zweiten Antriebsaggregats, herangezogen. Der Solldrehzahlgradient kann im Rahmen der Vorsteuerung durch die Beziehung

$$M = J \cdot w^*$$

ermittelt werden, wobei M das Solldrehmoment, J das Trägheitsmoment und w* den Solldrehzahlgradienten beschreiben. Um verbleibende Toleranzen auszuregeln, kann nachfolgend wenigstens eines der vorstehend beschriebenen Regelglieder verwendet werden, insbesondere das P-Regelglied. Bevorzugt wird im Rahmen der Regelung nach der Vorsteuerung das während dieser ermittelte Solldrehmoment anhand der vorliegenden Regelabweichung angepasst.

Erfindungsgemäß ist vorgesehen, dass der Solldrehzahlgradient einmalig zu Beginn des Angleichens gewählt wird. Beispielsweise liegt der Solldrehzahlgradient als nicht veränderbare Konstante vor. Es kann jedoch auch vorgesehen sein, den Solldrehzahlgradienten aus einer Mehrzahl von Solldrehzahlgradienten zu Beginn des Angleichens auszuwählen. Beispielsweise umfasst die Mehrzahl der Solldrehzahlgradienten unterschiedliche Fahrdynamikstufen, wobei einer ersten Fahrdynamikstufe ein erster Solldrehzahlgradient, einer zweiten Fahrdynamikstufe ein zweiter Solldrehzahlgradient und einer dritten Fahrdynamikstufe ein dritter Solldrehzahlgradient zugeordnet, wobei der erste Solldrehzahlgradient kleiner als der zweite Solldrehzahlgradient ist und dieser wiederum kleiner als der dritte Solldrehzahlgradient. Insoweit ist die erste Fahrdynamikstufe eine Komfortstufe, die zweite Fahrdynamikstufe eine Dynamikstufe und die dritte Fahrdynamikstufe eine Sportstufe. Der Solldrehzahlgradient wird beispielsweise während des gesamten Angleichens, also bis zum vollständigen Umschalten von der ersten Betriebsart auf die zweite Betriebsart beibehalten.

Die Erfindung betrifft weiterhin eine Hybridantriebseinrichtung, insbesondere zur Durchführung des Verfahrens gemäß den vorstehenden Ausführungen, mit einem ersten Antriebsaggregat und einem zweiten Antriebsaggregat, wobei die Hybridantriebseinrichtung dazu ausgebildet ist, ein Antriebsmoment der Hybridtriebseinrichtung in einer ersten Betriebsart nur mittels des ersten Antriebsaggregats und in einer zweiten Betriebsart mittels des ersten Antriebsaggregats und des zweiten Antriebsaggregats gemeinsam zu erzeugen, wobei bei einem Umschalten von der ersten Betriebsart auf die zweite Betriebsart eine Istdrehzahl des zweiten Antriebsaggregats an eine Solldrehzahl angeglichen wird, die der Istdrehzahl des ersten Antriebsaggregats entspricht. Dabei ist vorgesehen, dass die Hybridtriebseinrichtung dazu ausgebildet ist, zum Angleichen der Istdrehzahl einmalig zu Beginn des Angleichens einen Solldrehzahlgradient aus einer Mehrzahl von Solldrehzahlgradienten auszuwählen und ein anhand des Solldrehzahlgradienten bestimmtes Solldrehmoment an dem zweiten Antriebsaggregat einzustellen, wobei das Solldrehmoment mittels einer Regelung aus dem Solldrehzahlgradienten ermittelt wird, indem ein Istdrehzahlgradient auf den Solldrehzahlgradient geregelt wird, und wobei die Regelung eine Vorsteuerung umfasst, wobei das Solldrehmoment aus einem Trägheitsmoment des zweiten Antriebsaggregats und dem Solldrehzahlgradienten bestimmt wird. Auf die Vorteile einer derartigen Ausgestaltung der Hybridantriebseinrichtung beziehungsweise einer derartigen Vorgehensweise wurde bereits hingewiesen. Die Hybridantriebseinrichtung und das Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:

Figur 1    eine schematische Darstellung einer Hybridantriebseinrichtung, und

Figur 2    ein Blockschaltbild eines Verfahrens zum Betreiben der Hybridantriebseinrichtung.

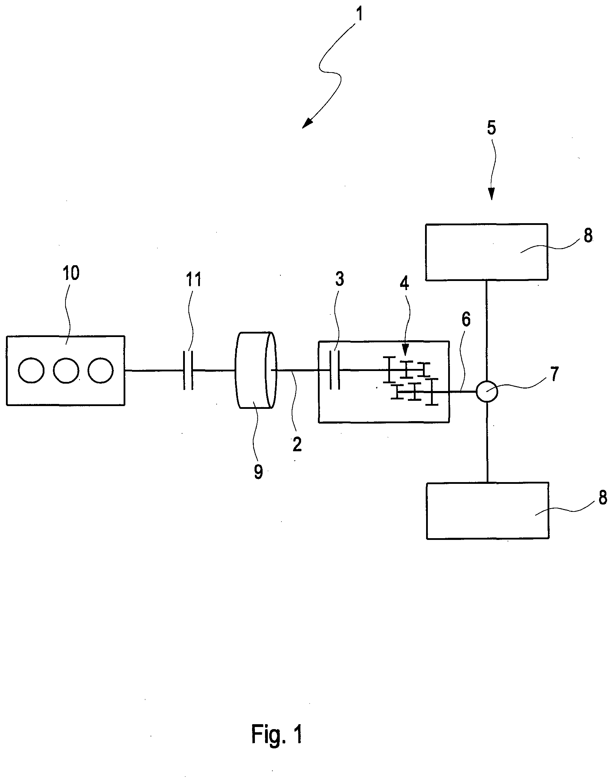

Die Figur 1 zeigt eine schematische Darstellung einer Hybridantriebseinrichtung 1, mit einer Abtriebswelle 2, die beispielsweise über eine Kupplung 3, insbesondere eine Anfahrkupplung, und/oder ein Getriebe 4, insbesondere ein Schaltgetriebe, an eine Achse 5 eines hier nicht näher dargestellten Kraftfahrzeugs angeschlossen ist. An einer Ausgangswelle 6 des Getriebes 4 liegt dabei beispielsweise ein Achsdifferential 7 vor, mittels welchem ein an der Abtriebswelle 2 beziehungsweise der Ausgangswelle 6 bereitgestelltes Drehmoment auf Räder 8 der Achse 5 beziehungsweise des Kraftfahrzeugs verteilt wird.

Die Hybridantriebseinrichtung 1 verfügt über ein erstes Antriebsaggregat 9 sowie ein zweites Antriebsaggregat 10. Beispielsweise ist das erste Antriebsaggregat unmittelbar auf der Abtriebswelle 2 der Hybridantriebseinrichtung 1 angeordnet, also permanent mit dieser wirkverbunden. In der Wirkverbindung zwischen der Abtriebswelle 2 und dem zweiten Antriebsaggregat 10 kann eine Trennkupplung 11 vorliegen, mittels welcher die Wirkverbindung zwischen dem zweiten Antriebsaggregat 10 einerseits sowie der Abtriebswelle 2 beziehungsweise dem ersten Antriebsaggregat 9 andererseits unterbrochen oder hergestellt werden kann. Das erste Antriebsaggregat 9 liegt beispielsweise als elektrische Maschine vor, während das zweite Antriebsaggregat 10 als Brennkraftmaschine ausgeführt ist.

In einer ersten Betriebsart der Hybridantriebseinrichtung soll nun ein Antriebsmoment der Hybridtriebseinrichtung, welches an der Abtriebswelle 2 anliegt, nur mittels des ersten Antriebsaggregats 9 erzeugt werden. In einer zweiten Betriebsart ist es dagegen vorgesehen, das Antriebsmoment mit Hilfe des ersten Antriebsaggregats 9 und des zweiten Antriebsaggregats 10 gemeinsam zu erzeugen, sodass beide jeweils einen von Null verschiedenen Anteil dieses Antriebsmoments bereitstellen. In der ersten Betriebsart ist insoweit die Trennkupplung 11 bevorzugt geöffnet, während sie in der zweiten Betriebsart zumindest teilweise, insbesondere vollständig, geschlossen ist. Unter dem vollständigen Schließen ist dabei ein Zustand der Trennkupplung 11 zu verstehen, in welchem kein Kupplungsschlupf auftritt.

In der ersten Betriebsart ist das zweite Antriebsaggregat 10 üblicherweise deaktiviert, weist also eine Drehzahl von Null auf, oder wird allenfalls mit einer geringen Drehzahl betrieben, insbesondere einer Drehzahl, welche kleiner ist als die Drehzahl des ersten Antriebsaggregats 9. Bei letzterer Ausführungsform muss selbstverständlich eine unter Umständen zwischen dem Antriebsaggregat 9 und der Abtriebswelle 2 vorliegende Übersetzung berücksichtigt werden. Bei einem Umschalten von der ersten Betriebsart auf die zweite Betriebsart muss eine Istdrehzahl des zweiten Antriebsaggregats 10 an eine Solldrehzahl angeglichen werden. Bei dem hier dargestellten Ausführungsbeispiel entspricht diese Solldrehzahl der Istdrehzahl der Abtriebswelle 2 beziehungsweise des ersten Antriebsaggregats 9. Selbstverständlich sind jedoch auch andere Ausführungsformen realisierbar, bei welchen unter Umständen die Solldrehzahl anders gewählt werden muss.

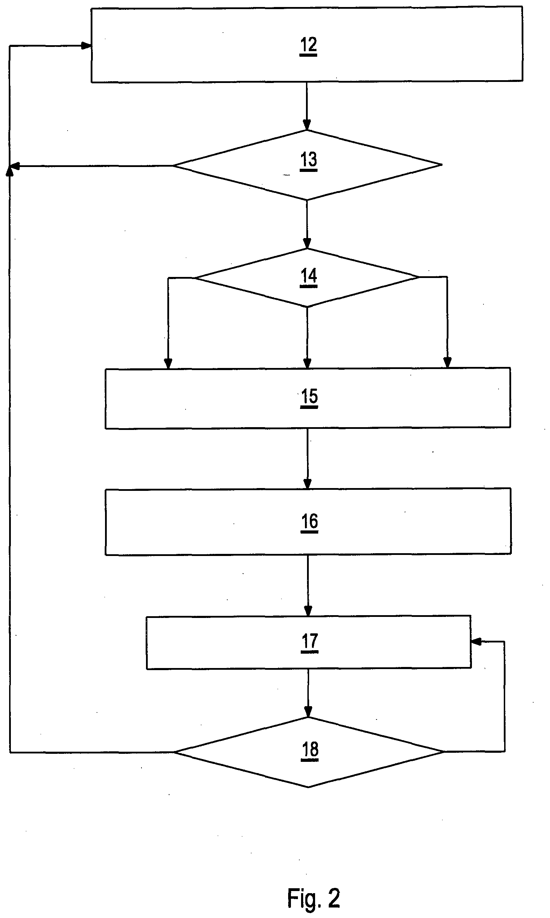

Die Figur 2 zeigt ein Blockschaltbild eines Verfahrens zum Betreiben der Hybridantriebseinrichtung 1. Im Rahmen einer Operation 12 wird die Hybridantriebseinrichtung 1 in der ersten Betriebsart betrieben, in welcher das Antriebsmoment allein mittels des ersten Antriebsaggregats 9 bereitgestellt wird. Das zweite Antriebsaggregat 10 ist dabei bevorzugt deaktiviert. Im Rahmen einer Abfrage 13 wird entschieden, ob das zweite Antriebsaggregat 10 zugeschaltet werden soll, also aus der ersten Betriebsart in die zweite Betriebsart gewechselt werden muss. Ist dies nicht der Fall, so wird erneut zu der Operation 12 verzweigt. Soll jedoch das Umschalten erfolgen, so wird im Rahmen einer Abfrage 14 die gewünschte Fahrdynamikstufe ausgewählt. Beispielsweise sind drei verschiedene Fahrdynamikstufen vorgesehen.

Nachfolgend wird in einer Operation 15 ein Solldrehzahlgradient ermittelt, insbesondere anhand der Fahrdynamikstufe. Selbstverständlich kann die Abfrage 14 auch entfallen und stets ein konstanter Solldrehzahlgradient verwendet werden. Nachfolgend wird im Rahmen einer Operation 16 aus dem Solldrehzahlgradienten ein Solldrehmoment ermittelt und an dem zweiten Antriebsaggregat 10 eingestellt. Bevorzugt erfolgt dabei ein Regeln eines sich aus der Istdrehzahl des zweiten Antriebsaggregats 10 ergebenden Istdrehzahlgradienten auf den zuvor ausgewählten Solldrehzahlgradienten. Dies ist beispielsweise mit Hilfe eines P-Reglers vorgesehen, welcher insoweit über ein P-Regelglied verfügt.

Zudem kann eine Vorsteuerung vorgesehen sein, bei welcher das Solldrehmoment aus dem Trägheitsmoment des zweiten Antriebsaggregats 10 und dem Solldrehzahlgradienten ermittelt wird. Sobald die Istdrehzahl des zweiten Antriebsaggregats 10 die Solldrehzahl erreicht hat, wird aus der Operation 16 zu der Operation 17 fortgeschritten. In dieser liegt insoweit die zweite Betriebsart der Hybridantriebseinrichtung 1 vor. Periodisch wird nun im Rahmen einer Abfrage 18 überprüft, ob die zweite Betriebsart fortgeführt werden soll oder ob das zweite Antriebsaggregat 10 abgekuppelt beziehungsweise deaktiviert werden soll. In erstem Fall wird zu der Operation 17 verzweigt, in letzterem zu der Operation 12. Entsprechend beginnt das Verfahren erneut von Beginn an.

Mit Hilfe des vorstehend beschriebenen Verfahrens ist ein äußerst rasches, jedoch gleichzeitig komfortables Angleichen der Istdrehzahl des zweiten Antriebsaggregats 10 an die Solldrehzahl möglich. Insbesondere ist es nicht notwendig, mit Kennfeldern dasjenige Solldrehmoment zu ermitteln, mit welchem der gewünschte Drehzahlgradient zumindest näherungsweise erhalten werden kann. Vielmehr ist stattdessen eine Regelung des Istdrehzahlgradienten auf den Solldrehzahlgradienten vorgesehen. Zumindest wird jedoch das Solldrehmoment aus dem zuvor ausgewählten Solldrehzahlgradienten bestimmt und anschließend an dem zweiten Antriebsaggregat 10 eingestellt.

## BEZUGSZEICHENLISTE

1 Hybridantriebseinrichtung
2 Abtriebswelle
3 Kupplung
4 Getriebe
5 Achse
6 Ausgangswelle
7 Achsdifferential
8 Rad
9 1. Antriebsaggregat
10 2. Antriebsaggregat
11 Trennkupplung
12 Operation
13 Abfrage
14 Abfrage
15 Operation
16 Operation
17 Operation
18 Abfrage

## Patentansprüche

1. Verfahren zum Betreiben einer Hybridantriebseinrichtung (1) mit einem ersten Antriebsaggregat (9) und einem zweiten Antriebsaggregat (10), wobei ein Antriebsmoment der Hybridantriebseinrichtung (1) in einer ersten Betriebsart nur mittels des ersten Antriebsaggregats (9) und in einer zweiten Betriebsart von dem ersten Antriebsaggregat (9) und dem zweiten Antriebsaggregat (10) gemeinsam erzeugt wird, und wobei bei einem Umschalten von der ersten Betriebsart auf die zweite Betriebsart eine Istdrehzahl des zweiten Antriebsaggregats (10) an eine Solldrehzahl angeglichen wird, die der Istdrehzahl des ersten Antriebsaggregats (9) entspricht, **dadurch gekennzeichnet, dass** zum Angleichen der Istdrehzahl einmalig zu Beginn des Angleichens ein Solldrehzahlgradient aus einer Mehrzahl von Solldrehzahlgradienten ausgewählt und ein anhand des Solldrehzahlgradienten bestimmtes Solldrehmoment an dem zweiten Antriebsaggregat (10) eingestellt wird, wobei das Solldrehmoment mittels einer Regelung aus dem Solldrehzahlgradienten ermittelt wird, indem ein Istdrehzahlgradient auf den Solldrehzahlgradient geregelt wird, und wobei die Regelung eine Vorsteuerung umfasst, wobei das Solldrehmoment aus einem Trägheitsmoment des zweiten Antriebsaggregats und dem Solldrehzahlgradienten bestimmt wird.

2. Verfahren nach Anspruch 1, **dadurch gekennzeichnet, dass** die Regelung wenigstens ein P-Regelglied, ein I-Regelglied und/oder ein D-Regelglied aufweist.

3. Hybridantriebseinrichtung (1), insbesondere zur Durchführung des Verfahrens nach einem oder mehreren der vorhergehenden Ansprüche, mit einem ersten Antriebsaggregat (9) und einem zweiten Antriebsaggregat (10), wobei die Hybridantriebseinrichtung (1) dazu ausgebildet ist, ein Antriebsmoment der Hybridantriebseinrichtung (1) in einer ersten Betriebsart nur mittels des ersten Antriebsaggregats (9) und in einer zweiten Betriebsart mittels des ersten Antriebsaggregats (9) und des zweiten Antriebsaggregats (10) gemeinsam zu erzeugen, wobei bei einem Umschalten von der ersten Betriebsart auf die zweite Betriebsart eine Istdrehzahl des zweiten Antriebsaggregats (10) an eine Solldrehzahl angeglichen wird, die der Istdrehzahl des ersten Antriebsaggregats (9) entspricht, **dadurch gekennzeichnet, dass** die Hybridantriebseinrichtung (1) dazu ausgebildet ist, zum Angleichen der Istdrehzahl einmalig zu Beginn des Angleichens einen Solldrehzahlgradient aus einer Mehrzahl von Solldrehzahlgradienten auszuwählen und ein anhand des Solldrehzahlgradienten bestimmtes Solldrehmoment an dem zweiten Antriebsaggregat (10) einzustellen, wobei das Solldrehmoment mittels einer Regelung aus dem Solldrehzahlgradienten ermittelt wird, indem ein Istdrehzahlgradient auf den Solldrehzahlgradient geregelt wird, und wobei die Regelung eine Vorsteuerung umfasst, wobei das Solldrehmoment aus einem Trägheitsmoment des zweiten Antriebsaggregats und dem Solldrehzahlgradienten bestimmt wird.

**Claims**

1. Method for operating a hybrid drive apparatus (1) having a first drive unit (9) and a second drive unit (10), wherein a drive torque of the hybrid drive apparatus (1) is produced only by means of the first drive unit (9) in a first operating mode and is produced jointly by the first drive unit (9) and the second drive unit (10) in a second operating mode, and wherein an actual rotational speed of the second drive unit (10) is brought into line with a target rotational speed upon a switchover from the first operating mode to the second operating mode, which corresponds to the actual rotational speed of the first drive unit (9), **characterised in that**, in order to bring the actual rotational speed into line, once at the beginning of bringing into line, a target rotational speed gradient is selected from a plurality of target rotational speed gradients and a target torque, determined on the basis of the target rotational speed gradients, is set at the second drive unit (10), wherein the target torque is determined by means of a control from the target rotational speed gradients, while an actual rotational speed gradient is controlled on the target rotational speed gradient, and wherein the control comprises a pre-control, wherein the target torque is determined on the basis of a moment of inertia of the second drive unit and the target rotational speed gradients.

2. Method according to claim 1, **characterised in that** the control has at least a P-control element, an I-control element and/or a D-control element.

3. Hybrid drive apparatus (1), in particular for implementing the method according to one or more of the preceding claims, having a first drive unit (9) and a second drive unit (10), wherein the hybrid drive apparatus (1) is designed to produce a drive torque of the hybrid drive apparatus (1) only by means of the first drive unit (9) in a first operating mode and jointly by means of the first drive unit (9) and the second drive unit (10) in a second operating mode, wherein an actual rotational speed of the second drive unit (10) is brought line with a target rotational speed upon a switchover from the first operating mode to the second operating mode, which corresponds to the actual rotational speed of the first drive unit (9), **characterised in that** the hybrid drive apparatus (1) is designed, in order to bring the actual rotational speed into line, once at the beginning of bringing into line, to select a target rotational speed gradient from a plurality of target rotational speed gradients and to set a target torque determined on the basis of the target rotational speed gradients at the second drive unit (10), wherein the target torque is determined by means of a control from the target rotational speed gradients, while an actual rotational speed gradient is controlled on the target rotational speed gradient, and wherein the control comprises a pre-control, wherein the target torque is determined on the basis of a moment of inertia of the second drive unit and the target rotational speed gradients.

**Revendications**

1. Procédé de fonctionnement d'un dispositif d'entraînement hybride (1) avec un premier groupe d'entraînement (9) et un second groupe d'entraînement (10), dans lequel un couple d'entraînement du dispositif d'entraînement hybride (1) est généré dans un premier mode de fonctionnement seulement au moyen du premier groupe d'entraînement (9) et dans un second mode de fonctionnement ensemble par le premier groupe d'entraînement (9) et le second groupe d'entraînement (10), et dans lequel lors d'une commutation du premier mode de fonctionnement au second mode de fonctionnement une vitesse de rotation réelle du second groupe d'entraînement (10) est adaptée à une vitesse de rotation de consigne qui correspond à la vitesse de rotation réelle du premier groupe d'entraînement (9), **caractérisé en ce que** pour l'adaptation de la vitesse de rotation réelle une fois au début de l'adaptation un gradient de vitesse de rotation de consigne est sélectionné à partir d'une pluralité de gradients de vitesse de rotation de consigne et un couple de consigne déterminé au moyen du gradient de vitesse de rotation de consigne est réglé au niveau du second groupe d'entraînement (10), dans lequel le couple de consigne est déterminé au moyen d'une régulation à partir du gradient de vitesse de rotation de consigne **en ce qu'**un gradient de vitesse de rotation réel est régulé au gradient de vitesse de rotation de consigne, et dans lequel la régulation comporte une précommande, dans lequel le couple de consigne est déterminé à partir d'un moment d'inertie du second groupe d'entraînement et du gradient de vitesse de rotation de consigne.

2. Procédé selon la revendication 1, **caractérisé en ce que** la régulation présente au moins un organe de régulation P, un organe de régulation I, et/ou un organe de régulation D.

3. Dispositif d'entraînement hybride (1), en particulier pour la réalisation du procédé selon l'une ou plusieurs des revendications précédentes, avec un premier groupe d'entraînement (9) et un second groupe d'entraînement (10), dans lequel le dispositif d'entraînement hybride (1) est réalisé afin de générer un couple d'entraînement du dispositif d'entraînement hybride (1) dans un premier mode de fonctionnement seulement au moyen du premier groupe d'entraînement (9) et dans un second mode de fonctionnement ensemble au moyen du premier groupe d'entraînement (9) et du second groupe d'entraînement (10), dans lequel lors d'une commutation du premier mode de fonctionnement au second mode de fonctionnement une vitesse de rotation réelle du second groupe d'entraînement (10) est adaptée à une vitesse de rotation de consigne qui correspond à la vitesse de rotation réelle du premier groupe d'entraînement (9), **caractérisé en ce que** le dispositif d'entraînement hybride (1) est réalisé afin de sélectionner pour l'adaptation de la vitesse de rotation réelle une fois au début l'adaptation un gradient de vitesse de rotation de consigne à partir d'une pluralité de gradients de vitesse de rotation de consigne et de régler un couple de consigne déterminé au moyen du gradient de vitesse de rotation de consigne au niveau du second groupe d'entraînement (10), dans lequel le couple de consigne est déterminé au moyen d'une régulation à partir du gradient de vitesse de rotation de consigne, **en ce qu'**un gradient de vitesse de rotation réel est régulé au gradient de vitesse de rotation de consigne, et dans lequel la régulation comporte une précommande, dans lequel le couple de consigne est déterminé à partir d'un moment d'inertie du second groupe d'entraînement et du gradient de vitesse de rotation de consigne.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008002383 A1
- DE 102012003020 A1
- DE 102010030800 A1
- DE 102008036166 A1